# EUROPÄISCHE PATENTSCHRIFT

(11) **EP 2 153 487 B1**
(45) Veröffentlichungstag und Bekanntmachung des Hinweises auf die Patenterteilung: **19.06.2013**
(21) Anmeldenummer: 08734937.9
(22) Anmeldetag: 01.04.2008
(51) Int. Cl.: H01M 2/10, H01M 10/50, H01M 6/46

(54) **ELEKTROCHEMISCHE ENERGIESPEICHEREINHEIT MIT KÜHLVORRICHTUNG**
ELECTROCHEMICAL ENERGY STORAGE UNIT COMPRISING A COOLING DEVICE
UNITÉ D'ACCUMULATION D'ÉNERGIE ÉLECTROCHIMIQUE COMPRENANT UN DISPOSITIF DE REFROIDISSEMENT

(30) Priorität: 05.04.2007 DE 102007016944
(43) Veröffentlichungstag der Anmeldung: 17.02.2010
(73) Patentinhaber: Behr GmbH & Co. KG, 70469 Stuttgart (DE)
(72) Erfinder: ISERMEYER, Tobias, 74245 Löwenstein (DE); DAMSOHN, Herbert, 73773 Aichwald (DE); PFENDER, Conrad, 74354 Besigheim (DE)
(74) Vertreter: Grauel, Andreas
(86) Internationale Anmeldenummer: PCT/EP2008/002586
(87) Internationale Veröffentlichungsnummer: WO 2008/122384

(56) Entgegenhaltungen:
- EP-A- 1 271 085
- EP-A- 1 278 263
- EP-A- 1 753 058
- DE-A1- 3 916 342
- DE-U- 7 439 582
- US-A- 5 756 227
- US-A1- 2003 165 734

## Beschreibung

Die Erfindung betrifft eine elektrochemische Energiespeichereinheit nach dem Oberbegriff des Anspruchs 1.

Insbesondere aus dem Bau von Kraftfahrzeugen mit elektrischem Antrieb, zum Beispiel einem Hybrid-Antrieb, sind elektrochemische Energiespeichereinheiten von hoher Leistungsdichte bekannt. Unter anderem handelt es sich dabei um Lithium-Ionen-Batterien. Es ist zudem allgemein bekannt, solche Hochleistungsbatterien mit Luft, beispielsweise aus einem klimatisierten Passagierbereich oder unmittelbar von einer Klimaanlage zu beströmen und so zu kühlen.

Des Weiteren ist es bekannt, derartige Batterien als Stapel von Flachzellen auszubilden, die mit Durchgängen zwischen benachbarten Zellen versehen sind. Diese Durchgänge sind für ein Fluid, beispielsweise ein Kühlmittel vorgesehen, so dass jede Flachzelle direkt gekühlt wird. Jedoch besteht bei dieser Anordnung das Problem, dass es schwierig ist, das Fluid gleichmäßig auf die Durchgänge zu verteilen. Ferner geht aufgrund der Durchgänge für das kühlende Fluid ein erhebliches Maß an Bauraum verloren.

Es ist daher eine gleichmäßige Kühlung der Flachzellen und ein Batterieaufbau anzustreben, der weniger Bauraum benötigt.

Folglich wird ein indirektes Kühlverfahren vorgeschlagen, bei dem ein oder mehrere Wärmeübertragungselemente zwischen der Mehrzahl von Flachzellen angeordnet sind, um diese zu kühlen. Die Wärmeübertragungselemente werden in weiterer Folge durch einen Wärmeübertrager oder Ähnliches gekühlt.

Die US 20030165734 A1 zeigt eine Batteriezelle, die eine Kühlrippe aus wärmeleitendem Material umfasst. Die Verbindung zwischen der Batteriezelle und der Kühlrippe erfolgt durch eine Leiste, die durch eine abgewinkelte Fläche der Batteriezelle gebildet wird.

In der EP 1278263 B1 ist in dem Gehäuse der prismatischen Batterie eine Metallplatte, welche aus einem Metall mit hoher Wärmeleitfähigkeit gebildet ist und als Wärmeübertragungsplatte dient, integral durch ein Spritzgussverfahren in jeder der Seitenwände des Gehäuses eingebettet, welche der langen Seitenfläche des Zellengehäuses entsprechen. Das untere Ende der Metallplatte steht von dem unteren Ende des Gehäuses der prismatischen Batterie hervor.

Die US 5756227 offenbart eine Batterieanordnung mit einer Temperaturregelung.

Der Aufbau und die Herstellung derartiger Batterien ist jedoch relativ kompliziert und daher kostenintensiv.

Es ist Aufgabe der Erfindung, eine elektrochemische Speichereinheit mit einer Kühleinheit zur Verfügung zu stellen, bei der mit einfachen Mitteln eine gleichmäßige Kühlung, die wenig Bauraum benötigt, realisiert wird.

Diese Aufgabe wird gelöst durch eine elektrochemische Speichereinheit mit den Merkmalen des Anspruchs 1. Vorteilhafte Ausgestaltungen sind Gegenstand der Unteransprüche.

Gemäß eines Grundgedanken der Erfindung ist eine elektrochemische Speichereinheit mit einer Mehrzahl von Flachzellen, wobei die Mehrzahl an Flachzellen mit ihren im wesentlichen parallel zueinander angeordneten flachen Seiten stapelartig übereinander angeordnet sind, ausgeführt, wobei zumindest ein Kühlblech zwischen zwei benachbarten Flachzellen parallel und getrennt von diesen angeordnet ist, wobei das Kühlblech an zumindest einer Seite abgewinkelt ist.

Durch diese Anordnung wird eine gleichmäßige Kühlung der Flachzellen erreicht und durch die abgewinkelte Seite des Kühlbleches eine leicht herzustellende Anbindung an einen Wärmeübertrageroder eine Wärmesenke realisiert.

In einer vorteilhaften Ausgestaltung der Erfindung ist das Kühlblech an zwei gegenüberliegenden Seiten oder an allen Seiten abgewinkelt. Eine derartige Ausgestaltung ermöglicht es, je nach Kühlbedarf die elektrochemische Speichereinheit an zwei oder an allen Seiten mit einer Wärmesenke zu verbinden.

Die Wärmesenke kann als Rohr, bevorzugt als Flachrohr, insbesondere als Mehrkammerflachrohr, ausgebildet sein. Alternativ kann die Wärmesenke auch aus mehreren Flachrohren bestehen. Die Flachrohre können in einer alternativen Ausgestaltung der Erfindung als Flossenrohre ausgeführt sein. Derartige Flossenrohre bestehen aus einem durchströmten Kanal und einem undurchströmten abstehenden Teil ähnlich einer Außenberippung.

In einer weiteren Ausgestaltung der Erfindung sind die Rohre mit einem oder mehreren Sammelrohren kommunizierend verbunden. Das Sammelrohr hat die Aufgabe, eine vorgegebene Durchströmung der Rohre sicherzustellen.

In einer vorteilhaften Ausgestaltung der Erfindung ist die Wärmesenke als Baueinheit ausgebildet, die über die elektrochemische Speichereinheit geschoben werden kann. Die Wärmesenke wird dabei durch Halterippen an der elektrochemischen Speichereinheit fixiert.

In einer weiteren Ausführungsform der Erfindung besteht die Wärmesenke aus Kühlrippen, insbesondere Wellrippen. Die Kühlrippen werden durch einen Luftstrom, beispielsweise aus der Fahrgastzelle oder unmittelbar von einer Klimaanlage beströmt.

Erfindungsgemäß sind zwei Kühlbleche, die auf gegenüberliegenden Seiten der Flachzelle angeordnet sind, zu einer Baueinheit ausgebildet. Die Baueinheit kann an ihrer nicht abgewinkelten Seite mit schlitzartigen Öffnungen versehen sein, um bei einem Schadensfall der Flachzelle ein Ausströmen von Gas oder anderen Substanzen gewährleisten zu können.

In einer weiteren Ausgestaltung der Erfindung ist diese Baueinheit an einer oder an mehreren ihrer abgewinkelten Seiten mit Vorsprüngen versehen. Diese Vorsprünge dienen zu einer definierten Distanzierung zur Wärmesenke.

Die Wärmesenke kann an die Kühlbleche gelötet sein. In einer besonders bevorzugten Weiterbildung der Erfindung ist die Wärmesenke mit der elektteln und elektrische Kurzschlüsse durch Feuchtigkeit, insbesondere durch Kondenswasser.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere wichtige Merkmale der vorliegenden Erfindung ergeben sich aus der nachfolgenden detaillierten Beschreibung in Verbindung mit den Ansprüchen und den Zeichnungen.

Nachfolgend werden bevorzugte Ausführungsbeispiele einer erfindungsgemäßen elektrochemischen Speichereinheit beschrieben und anhand der anliegenden Zeichnungen näher erläutert.

Es zeigen:
Fig. 1 eine schematische Perspektivdarstellung eines elektrochemischen Energiespeichers gemäß vorliegender Erfindung;
Fig. 2a eine schematische Perspektivdarstellung eines Kühlbleches gemäß Figur 1;
Fig. 2b eine schematische Perspektivdarstellung eines Kühlbleches mit zu kühlender Flachzelle gemäß Figur 1;
Fig. 3 eine schematische Perspektivdarstellung eines weiteren Ausführungsbeispiels eines Kühlbleches gemäß vorliegender Erfindung;
Fig. 4 eine Schnittansicht eines weiteren Ausführungsbeispieles eines elektrochemischen Energiespeichers gemäß vorliegender Erfindung;
Fig. 5 eine Schnittansicht eines elektrochemischen Energiespeichers mit Kühlblechen;
Fig. 6a ein Ausführungsbeispiel einer Wärmesenke;
Fig. 6b ein weiteres Ausführungsbeispiel einer Wärmesenke;

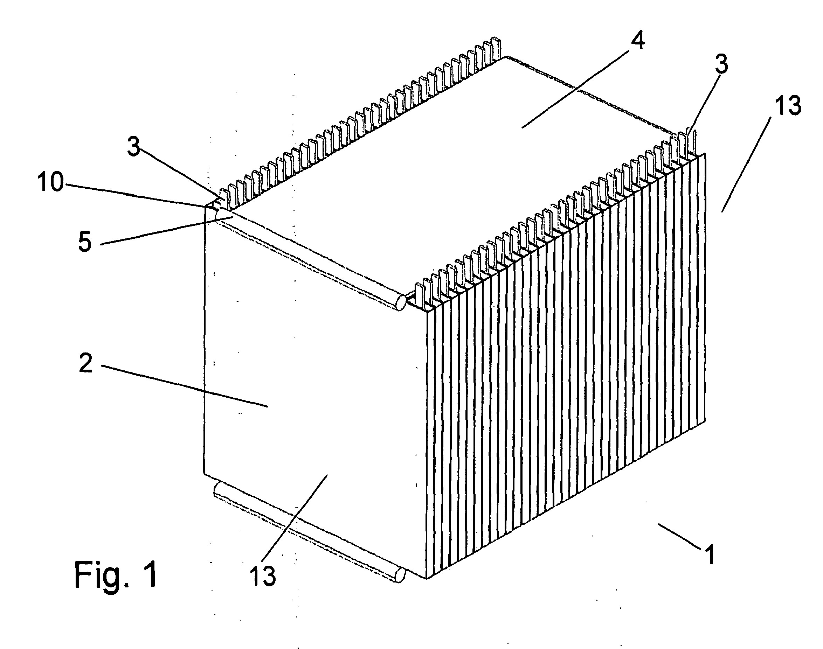

Fig. 1 zeigt einen elektrochemischen Energiespeicher gemäß vorliegender Erfindung in einer schematischen Perspektivdarstellung. Ein derartiger Energiespeicher weist eine Mehrzahl von Flachzellen auf, die mit ihrer flächigen Seite parallel zueinander angeordnet sind und einen Zellstapel bilden.

In einem nicht dargestellten Ausführungsbeispiel kann ein erfindungsgemäßer Energiespeicher mehrere Stapel aus Flachzellen umfassen, wobei die Stapel je nach Bauraum auf verschiedene Arten zueinander angeordnet sein können. Ein typischer Energiespeicher umfasst etwa vierzig Flachzellen. Diese können in einem einzigen Stapel gemäß Fig. 1 angeordnet sein oder beispielsweise in vier Stapeln zu je zehn Flachzellen.

Des Weiteren umfasst der Energiespeicher 1 mindestens ein Kühlblech 2, das zwischen zwei benachbarten Flachzellen (nicht dargestellt) parallel und getrennt von diesen angeordnet ist. Gemäß Fig. 1 ist jeweils ein Kühlblech zwischen zwei Flachzellen angeordnet. Es ist auch möglich, mindestens ein Kühlblech nur nach jeder zweiten Flachzelle oder nach einer anderen beliebigen Reihenfolge anzuordnen.

In einem nicht dargestellten Ausführungsbeispiel sind die einzelnen Kühlbleche mit der Fähigkeit versehen, sich ineinander zu verclipsen, so dass ein in sich gespannter Zellstapel mit definierten Maximaltoleranzen entsteht. Alternativ kann eine Spannvorrichtung, beispielsweise ein Metallband, an den Stapelenden 13 angebracht werden, um den Zellstapel auf diese Weise zu verspannen.

Als Wärmesenke dient gemäß Fig.1 ein U-förmig gebogenes Flachrohr 4, das den Zellstapel umschließt und kommunizierend mit einem oder mehreren Sammelrohren 5 verbunden ist. Das Sammelrohr 5 hat die Aufgabe, eine vorgegebene Durchströmung der Flachrohre, beispielsweise durch ein Kältemittel, sicherzustellen.

In einem nicht dargestellten Ausführungsbeispiel können zwei U-förmig gebogene Flachrohre am Zellstapel angebunden sein. Durch eine derartige Ausgestaltung wird eine allseitige Anbindung einer Wärmesenke an den Zellstapel realisiert.

Die Wärmesenke kann durch ein stoffschlüssiges Verfahren, beispielsweise durch einen Lötprozess mit dem Zellstapel verbunden werden. Es ist auch möglich die Wärmesenke mit dem Zellstapel, bevorzugt durch ein wärmeleitendes Kunstharz, zu vergießen. Dieses Kunstharz besitzt nach dem Aushärten eine geringe Flexibilität, um dem Aufbau mechanischer Spannungen im Vergussblock vorzubeugen.

Der Verguss kann in einer verlorenen Form, beispielsweise einer Polyamid Kiste oder mit einer abnehmbaren wieder verwendbaren Form, beispielsweise einer Silikonform oder einer Teflonform, erfolgen.

Ferner weist das Kühlblech Aussparungen 10 für die Ableiter 3 der Flachzelle auf.

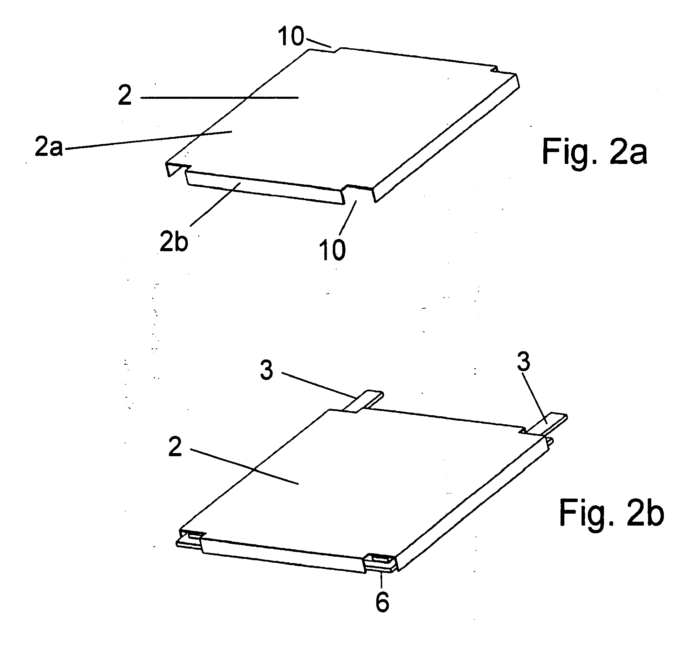

Fig. 2a zeigt ein Kühlblech 2 gemäß vorliegender Erfindung in einer schematischen Perspektivdarstellung. Ein derartiges Kühlblech, das bevorzugt aus einem Metall, insbesondere aus Kupfer oder Aluminium besteht, weist eine zu der Flachzelle im Wesentlichen parallele Fläche 2a auf und eine Fläche 2b, die zu der Fläche 2a, vorzugsweise in einem im Wesentlichen rechten Winkel, abgewinkelt ist. Die abgewinkelte Weglänge entspricht gemäß Fig. 2b im Wesentlichen der Zelldicke. Ferner weist das Kühlblech Aussparungen 10 für die Ableiter 3 der Flachzelle auf.

Fig. 2b zeigt in einer schematischen Perspektivdarstellung ein Kühlblech 2 mit zu kühlender Flachzelle 6. Eine derartige Flachzelle 6, die beispielsweise als Lithium-Ionen-Zelle ausgebildet ist, umfasst einen Elektrolyten, zwei Ableiter 3 für den negativen und positiven Pol und ein Gehäuse der Flachzelle. Im vorliegenden Fall sind die Ableiter an entgegengesetzten Enden der Stirnseite der Flachzelle angeordnet. In einem nicht dargestellten Ausführungsbeispiel sind die Ableiter von den Enden der Stirnseite beabstandet angeordnet.

Die Ableiter 3 werden bezüglich benachbarter Flachzellen so miteinander verbunden, dass die Flachzellen in dem Stapel gemäß Fig. 1 seriell verschaltet sind. Zur Vereinfachung dieser Kontaktierung sind die Ausrichtungen der Ableiter in dem Stapel gemäß Fig. 1 alternierend, so dass auf einer Seite jeweils ein negativer Pol neben einem positiven Pol der angrenzenden Flachzelle angeordnet ist.

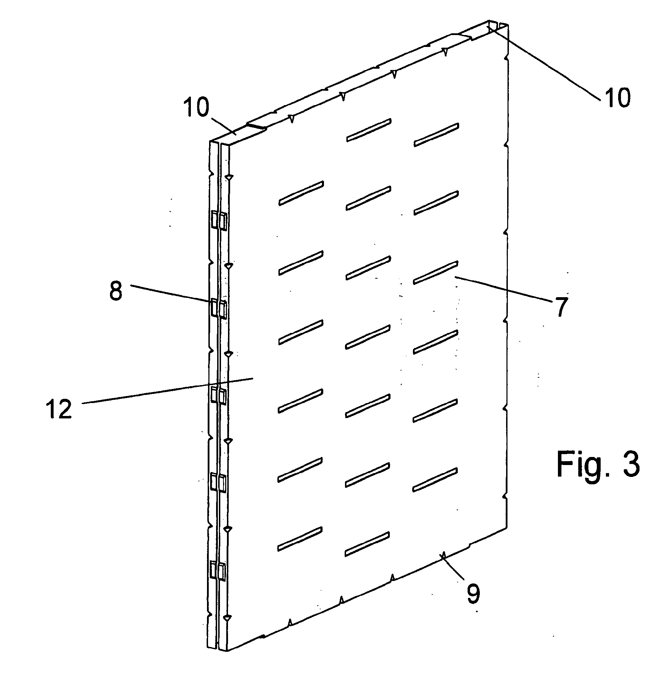

Fig. 3 zeigt ein weiteres Ausführungsbeispiel eines Kühlbleches gemäß vorliegender Erfindung. In diesem Ausführungsbeispiel bilden zwei Kühlbleche, die auf gegenüberliegenden Seiten der Flachzelle angeordnet sind, eine Baueinheit 12. Durch diese Anordnung ergibt sich eine außen metallische Kassette mit einer Flachzelle als Inhalt. Die Flachzelle ist formschlüssig mit der Kassette verbunden. Es ist auch möglich die Flachzelle stoffschlüssig, bevorzugt durch einen Klebstoff oder eine wärmeleitfähige Paste mit der Kassette zu verbinden. Es ist sowohl ein einseitiges als auch beidseitiges Einkleben der Flachzelle in die Kassette möglich. Durch diese Art der Anbindung wird eine Verbesserung des Wärmeübergangs zwischen Flachzelle und Kassette erreicht, da offene Luftspalte vermieden werden.

Ferner weist das Kühlblech 2 schlitzartige Öffnungen 7 auf. Diese Öffnungen dienen dazu, bei einem Versagensfall aus der Flachzelle austretendes Gas aus der Kassette und in weiterer Folge aus dem elektrochemischen Energiespeicher abzuführen.

Des Weiteren weist das Kühlblech mehrere Sicken 9 und Vorsprünge 8 auf. Die Sicken 9, die vorzugsweise an allen Kanten des Kühlbleches 2 angeordnet sind, dienen zu einer verbesserten Stabilität der Abkantung. Die Vorsprünge 8 sind an den abgewinkelten Flächen des Kühlbleches angeordnet und dienen zu einer definierten Distanzierung des Kühlbleches zur Wärmesenke (nicht dargestellt). Gemäß Fig. 3 sind die Vorsprünge an zwei abgewinkelten Flächen des Kühlbleches angeordnet. Gemäß Fig. 3 beträgt die abgewinkelte Weglänge in diesem Ausführungsbeispiel im Wesentlichen die Hälfte der Ausdehnung der Flachzelle in normaler Richtung zur flächigen Seite der Flachzelle.

In einem nicht dargestellten Ausführungsbeispiel sind die Vorsprünge an mehreren abgewinkelten Flächen angeordnet.

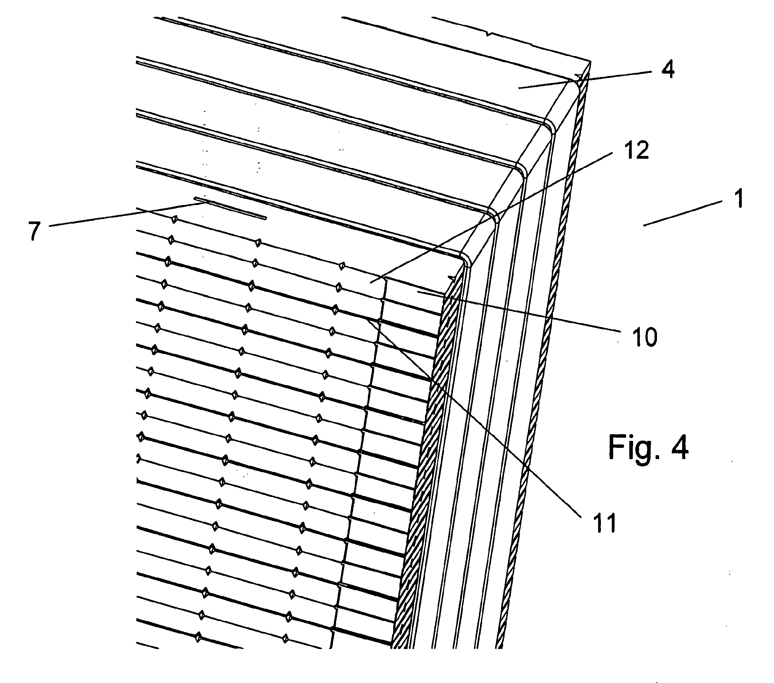

Fig. 4 zeigt einen Ausschnitt eines Schnittbildes eines weiteren Ausführungsbeispiels einer elektrochemischen Energiespeichereinheit 1 gemäß vorliegender Erfindung. In diesem Ausführungsbeispiel ist nach jeder zweiten Baueinheit 12 ein Spalt 11 angeordnet. Dieser Spalt kann mit einem kompressiblen Material, beispielsweise einem Vlies, ausgefüllt werden und dient dem Toleranzausgleich bei variablen Zellkonsistenzen. Zusätzlich kann dieser Spalt einen Austrittskanal für siedendes Elektrolyt im Schadensfall bereitstellen.

Ferner weist die elektrochemische Energiespeichereinheit eine Wärmesenke 4, die aus mehreren Flachrohren besteht, auf. In einem nicht dargestellten Ausführungsbeispiel kann die Wärmesenke auch aus einem Flachrohr bestehen.

Eine elektrisch nicht leitende Grundplatte (nicht dargestellt) mit ähnlichen Aussparungen wie die Aussparungen 10 der Kassette, die als Durchbrüche für die Ableiter 3 vorgesehen sind, gibt die Position der Baueinheiten 12 vor.

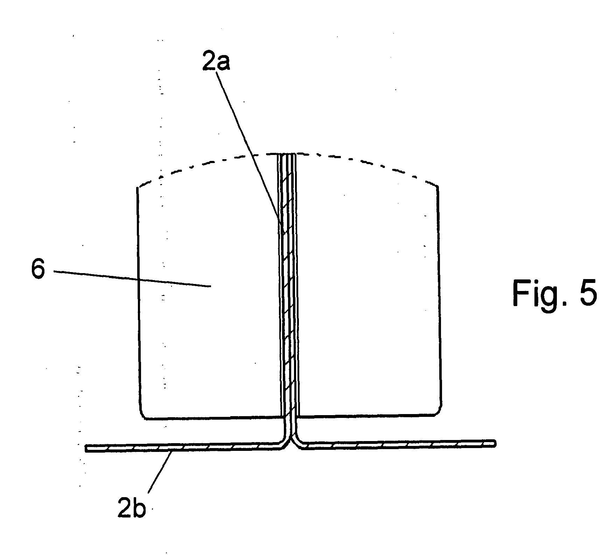

Fig. 5 zeigt ein weiteres Ausführungsbeispiel eines elektrochemischen Energiespeichers gemäß vorliegender Erfindung. In dieser Ausführungsform sind genau zwei Kühlbleche 2 zwischen benachbarten Flachzellen 6 angeordnet. Die Kühlbleche werden mit ihren abgewinkelten Seiten 2b gegen eine nicht dargestellte Wärmesenke gedrückt, um einen thermischen Kontakt zwischen Kühlblech und Wärmesenke herzustellen. Um den thermischen Kontakt zu verbessern und der Konstruktion noch zusätzliche mechanische Stabilität zu verleihen können die Kühlbleche in einer alternativen Ausführungsform mit der Wärmesenke stoffschlüssig verbunden, beispielsweise verklebt sein.

Die nicht dargestellte gegenüberliegende Seite der Kühlbleche kann ähnlich ausgestaltet sein, wie in Fig. 5. In einer weiteren Ausführungsform können die beiden Bleche über einen Schließfalz miteinander verbunden sein.

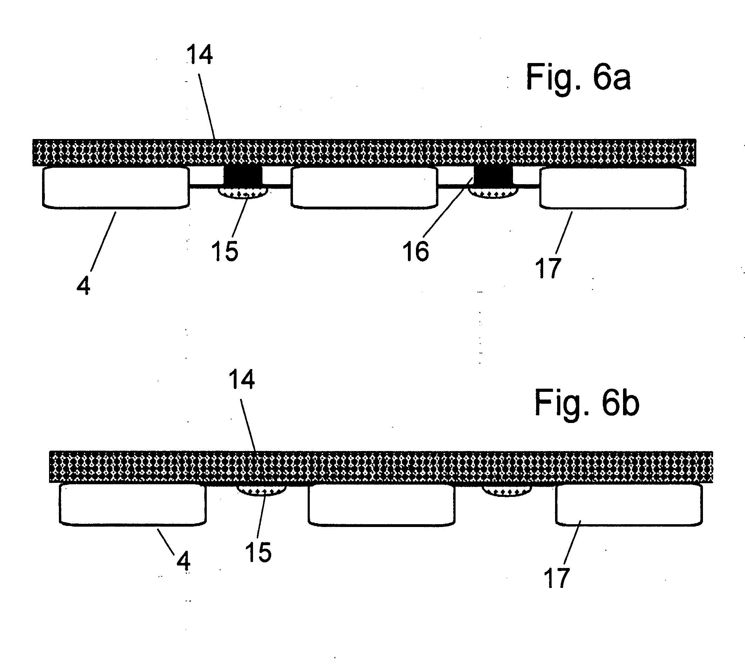

Die Fig. 6a und Fig. 6b zeigen zwei Ausführungsformen einer Wärmesenke 4 mit denen das zumindest eine Kühlblech zumindest mittelbar thermisch kontaktiert ist, um die in den Flachzellen entstehende Wärme an ein Kühlmedium zu übertragen. Hierbei wird an jedes Kühlblech (nicht dargestellt) eine Kunststoffschiene 14 angebracht, beispielsweise durch festclipsen, kleben oder umspritzen. An der Kunststoffschiene 14 vorhandene Stifte 15 werden durch Aussparungen in der Wärmesenke 4 gesteckt und anschließend zu Nietköpfen 15 ausgeformt, so dass eine formschlüssige Verbindung entsteht. Die Wärmesenke weist Flachrohre 17 auf, durch die ein Kältemittel oder ein Kühlmittel oder ein anderes Fluid strömt. Um die Stabilität weiter zu erhöhen, können die Stifte 15 in Verstärkungselementen 16 geführt werden.

## Patentansprüche

1. Elektrochemischer Energiespeicher (1), umfassend eine Mehrzahl von Flachzellen (6), jeweils umfassend einen Elektrolyten, mindestens zwei Ableiter und ein Gehäuse der Flachzelle, wobei die Mehrzahl an Flachzellen mit ihren im wesentlichen parallel zueinander angeordneten flachen Seiten stapelartig übereinander angeordnet sind, wobei zumindest ein Kühlblech (2) zwischen zwei benachbarten Flachzellen parallel und getrennt von diesen angeordnet ist, wobei das Kühlblech an zumindest einer Seite abgewickelt ist, **dadurch gekennzeichnet, dass** genau zwei Kühlbleche zwischen zwei benachbarten Flachzellen angeordnet sind und auf gegenüberliegenden Seiten der Flachzelle angeordnete Kühlbleche eine Baueinheit bilden und die Flachzelle formschlossig mit der Baueinheit verbunden ist.

2. Elektrochemischer Energiespeicher nach Anspruch 1, **dadurch gekennzeichnet, dass** das Kühlblech zumindest an zwei gegenüberliegenden Seiten abgewinkelt ist.

3. Elektrochemischer Energiespeicher nach Anspruch 1, **dadurch gekennzeichnet, dass** das Kühlblech an allen Seiten abgewinkelt ist.

4. Elektrochemischer Energiespeicher nach einem der vorhergehenden Ansprüche, **dadurch gekennzeichnet, dass** die abgewinkelte Weglänge im Wesentlichen der Ausdehnung der Flachzelle in normaler Richtung zur flächigen Seite der Flachzelle entspricht.

5. Elektrochemischer Energiespeicher nach einem der vorhergehenden Ansprüche, **dadurch gekennzeichnet, dass** benachbarte Kühlbleche und/oder aus Kühlblechen gebildete benachbarte Baueinheiten miteinander verclipsbar sind.

6. Elektrochemischer Energiespeicher nach einem der vorhergehenden Ansprüche, **dadurch gekennzeichnet, dass** das zumindest eine Kühlblech mit der Flachzelle stoffschlüssig verbunden ist

7. Elektrochemischer Energiespeicher nach einem der vorhergehenden Ansprüche, **dadurch gekennzeichnet, dass** zwischen den Zellen oder zwischen benachbarten Baueinheiten, insbesondere nach jeder zweiten Baueinheit, Vliese angeordnet sind.

8. Elektrochemischer Energiespeicher nach einem der vorhergehenden Ansprüche, **dadurch gekennzeichnet, dass** das zumindest eine Kühlblech auf der nicht abgewinkelten Fläche (2a) schlitzartige Öffnungen aufweist.

9. Elektrochemischer Energiespeicher nach einem der vorhergehenden Ansprüche, **dadurch gekennzeichnet, dass** das zumindest eine Kühlblech auf der abgewinkelten Fläche (2b) Vorsprünge aufweist.

10. Elektrochemischer Energiespeicher nach einem der vorhergehenden Ansprüche, **dadurch gekennzeichnet, dass** das zumindest eine Kühlblech auf der abgewinkelten Fläche mit einer Wärmesenke verbunden ist.

## Claims

1. An electrochemical energy store (1), comprising a plurality of flat cells (6), each comprising an electrolyte, at least two surge arresters, and a housing of the flat cell, wherein the multiplicity of flat cells are arranged one above the other in a stack-like manner via their flat sides arranged substantially parallel to one another, wherein at least one cooling plate (2) is arranged parallel between two adjacent flat cells and separate therefrom, wherein the cooling region is bent on at least one side, **characterised in that** precisely two cooling plates are arranged between two adjacent flat cells and cooling plates arranged on opposite sides of the flat cell form a structural unit and the flat cell is interlocked with the structural unit.

2. The electrochemical energy store according to claim 1, **characterised in that** the cooling plate is bent on at least two opposite sides.

3. The electrochemical energy store according to claim 1, **characterised in that** the cooling plate is bent on all sides.

4. The electrochemical energy store according to one of the preceding claims, **characterised in that** the bent path length corresponds substantially to the extension of the flat cell in the normal direction relative to the flat side of the flat cell.

5. The electrochemical energy store according to one of the preceding claims, **characterised in that** adjacent cooling plates and/or adjacent structural units formed from cooling plates can be clipped together.

6. The electrochemical energy store according to one of the preceding claims, **characterised in that** the at least one cooling plate is integrally bonded to the flat cell.

7. The electrochemical energy store according to one of the preceding claims, **characterised in that** nonwovens are arranged between the cells or between adjacent structural units, in particular after each second structural unit.

8. The electrochemical energy store according to one of the preceding claims, **characterised in that** the at least one cooling plate has slot-like openings on the unbent face (2a).

9. The electrochemical energy store according to one of the preceding claims, **characterised in that** the at least one cooling plate has protrusions on the bent face (2b).

10. The electrochemical energy store according to one of the preceding claims, **characterised in that** the at least one cooling plate is connected on the angled face to a heat sink.

## Revendications

1. Accumulateur d'énergie électrochimique (1), comprenant une pluralité d'éléments plats (6), comprenant à chaque fois un électrolyte, au moins deux déflecteurs et un boîtier de l'élément plat, où la pluralité d'éléments plats est disposée de façon superposée, lesdits éléments plats étant empilés en ayant leurs côtés plats disposés pratiquement de façon parallèle les uns par rapport aux autres, où au moins une tôle de refroidissement (2) est disposée entre deux éléments plats adjacents, de façon parallèle et séparée de ces éléments plats, où la tôle de refroidissement est coudée sur au moins un côté, **caractérisé en ce que** précisément deux tôles de refroidissement sont disposées entre deux éléments plats adjacents, et des tôles de refroidissement disposées sur des côtés opposés de l'élément plat forment un ensemble unitaire, l'élément plat étant assemblé avec l'ensemble unitaire, par complémentarité de forme.

2. Accumulateur d'énergie électrochimique selon la revendication 1, **caractérisé en ce que** la tôle de refroidissement est coudée au moins sur deux côtés opposés.

3. Accumulateur d'énergie électrochimique selon la revendication 1, **caractérisé en ce que** la tôle de refroidissement est coudée sur tous les côtés.

4. Accumulateur d'énergie électrochimique selon l'une quelconque des revendications précédentes, **caractérisé en ce que** la longueur de parcours coudée correspond pratiquement à la taille de l'élément plat, suivant une direction normale par rapport au côté de grande étendue de l'élément plat.

5. Accumulateur d'énergie électrochimique selon l'une quelconque des revendications précédentes, **caractérisé en ce que** des tôles de refroidissement adjacentes et/ou des ensembles unitaires adjacents formés avec des tôles de refroidissement peuvent être clipsé(e)s entre elles et/ou entre eux.

6. Accumulateur d'énergie électrochimique selon l'une quelconque des revendications précédentes, **caractérisé en ce que** la tôle de refroidissement au moins au nombre de un est assemblée avec l'élément plat, par continuité de matière.

7. Accumulateur d'énergie électrochimique selon l'une quelconque des revendications précédentes, **caractérisé en ce que** des tissus non tissés sont disposés entre les éléments ou entre des ensembles unitaires adjacents, en particulier après chaque deuxième ensemble unitaire.

8. Accumulateur d'énergie électrochimique selon l'une quelconque des revendications précédentes, **caractérisé en ce que** la tôle de refroidissement au moins au nombre de un présente des ouvertures en forme de fente sur la surface (2a) non coudée.

9. Accumulateur d'énergie électrochimique selon l'une quelconque des revendications précédentes, **caractérisé en ce que** la tôle de refroidissement au moins au nombre de un présente des parties saillantes sur la surface coudée (2b).

10. Accumulateur d'énergie électrochimique selon l'une quelconque des revendications précédentes, **caractérisé en ce que** la tôle de refroidissement au moins au nombre de un est assemblée, sur la surface coudée, avec un puits de chaleur.
